# EUROPEAN PATENT APPLICATION

(11) **EP 2 515 085 A2**
(43) Date of publication of application: **24.10.2012**
(21) Application number: 12164495.9
(22) Date of filing: 17.04.2012
(51) Int. Cl.: G01D 5/14, G01D 4/00

(54) **Systems and method for transmitting data in an advanced metering infrastructure**

(30) Priority: 19.04.2011 US 201113089631
(71) Applicant: General Electric Company, Schenectady, NY 12345 (US)
(72) Inventor: Boot, John Christopher, Atlanta, GA 30339-8402 (US); Ree, Bradley Richard, Atlanta, GA 30339-8402 (US)
(74) Representative: Picker, Madeline Margaret

(57) **Abstract**

A system (200) for transmitting data in an advanced metering infrastructure (AMI) is provided. The system includes an AMI network (110) configured to communicate by transmitting data via a plurality of physical communication media that include at least a first physical communication medium and a second physical communication medium, and a plurality of meters (206, 208, 210, 212). Each of the plurality of meters are configured to select a physical communication medium from the first physical communication medium and the second physical communication medium based at least in part on an operational state of the first physical communication medium and an operational state of the second physical communication medium, and communicate with the AMI network via the selected physical communication medium.

## Description

### BACKGROUND OF THE INVENTION

The present application relates generally to metered power systems and, more particularly, to systems for communicating between meters and a power network.

Demand for electricity by customers may exceed available supply from power utility companies. For example, certain events may cause energy demand to peak at a level that is above a utility's ability to provide electricity to every customer. Accordingly, "blackouts" or "brownouts" may be imposed upon customers. Power utilities generally may not have the ability to selectively determine which loads within a customer's premises will be disabled due to a blackout or brownout. Rather, during such power conditions, a customer's entire premises are typically subjected to a reduction or complete loss of power when a brownout or blackout occurs.

To combat this largely indiscriminate loss of power, at least some power utilities use so-called "smart grid" or advanced metering infrastructure (AMI) power networks. Using an AMI network, a power utility may communicate with individual loads within a customer's premises to selectively reduce power consumption during peak usage periods. As such, a power utility may reduce power to low priority loads, while maintaining power to high priority loads.

For an AMI network to function properly, individual meters must be able to communicate with the AMI network via communication links. In at least some systems, meters communicate with the AMI network over communication links using a single communication medium. However, if such communication links and/or communication media fail, the meters are unable to communicate with the AMI network until a service provider manually repairs or replaces the broken communication link or meter, or reconfigures the communication capabilities of the meter. Often however, such communication issues are not discovered until power demands require power to be reduced to a consumer.

### BRIEF DESCRIPTION OF THE INVENTION

In one aspect, a system for transmitting data in an advanced metering infrastructure (AMI) is provided. The system comprises an AMI network configured to communicate by transmitting data via a plurality of physical communication media that include at least a first physical communication medium and a second physical communication medium, and a plurality of meters. Each of the plurality of meters are configured to select a physical communication medium from the first physical communication medium and the second physical communication medium based at least in part on an operational state of the first physical communication medium and an operational state of the second physical communication medium, and communicate with the AMI network via the selected physical communication medium.

In another aspect, a meter for use in an advanced metering infrastructure (AMI) is provided. The meter comprises a first communication interface configured to communicate with an AMI network using a first physical communication medium, a second communication interface configured to communicate with the AMI network using a second physical communication medium, and a processor coupled to the first communication interface and the second communication interface. The processor is programmed to select one of the first communication interface and the second communication interface based at least in part on an operational state of the first physical communication medium and an operational state of the second physical communication medium, and communicate with the AMI network using the selected communication interface.

In yet another aspect, a method for transmitting data in an advanced metering infrastructure (AMI) is provided. The method comprises providing a meter configured to communicate with an AMI network by transmitting data via a first physical communication medium and via a second physical communication medium, selecting one of the first physical communication medium and the second physical communication medium based at least in part on an operational state of the first physical communication medium and an operational state of the second physical communication medium, and transmitting data from the meter to the AMI network via the selected communication medium.

### BRIEF DESCRIPTION OF THE DRAWINGS

Fig. 1 is a block diagram of an example utility power distribution system.
Fig. 2 is a schematic diagram of an example communication system that may be used with the system shown in Fig. 1.
Fig. 3 is a block diagram of an example computing device that may be used with the communication system shown in Fig. 2.
Fig. 4 is a schematic diagram of an example communication system that may be used with the system shown in Fig. 1.
Fig. 5 is a schematic diagram of an example communication system that may be used with the system of Fig. 1.
Fig. 6 is a flowchart of an example method that may be used in implementing the example communication system shown in Fig. 2.

### DETAILED DESCRIPTION OF EMBODIMENTS OF THE INVENTION

The systems and methods described herein facilitate maintaining communications in an advanced metering infrastructure (AMI). More specifically, because the systems and methods described herein include meters that communicate using a plurality of physical communication media. As such, if one physical communication medium fails, the meters described herein are still capable of communicating with an AMI network. Moreover, the meters described herein are configured to select a physical communication medium to be used based on a ranked hierarchy, improving the efficiency of communications in the AMI. Finally, the systems and methods described herein enable meters to dynamically discover and establish new communication links between one another and the AMI network.

Technical features of the methods and systems described herein include at least one of:
(a) providing a meter configured to communicate with an AMI network by transmitting data via a first physical communication medium and via a second physical communication medium; (b) selecting one of the first physical communication medium and the second physical communication medium based at least in part on an operational state of the first physical communication medium and an operational state of the second physical communication medium; and (c) transmitting data from the meter to the AMI network via the selected communication medium.

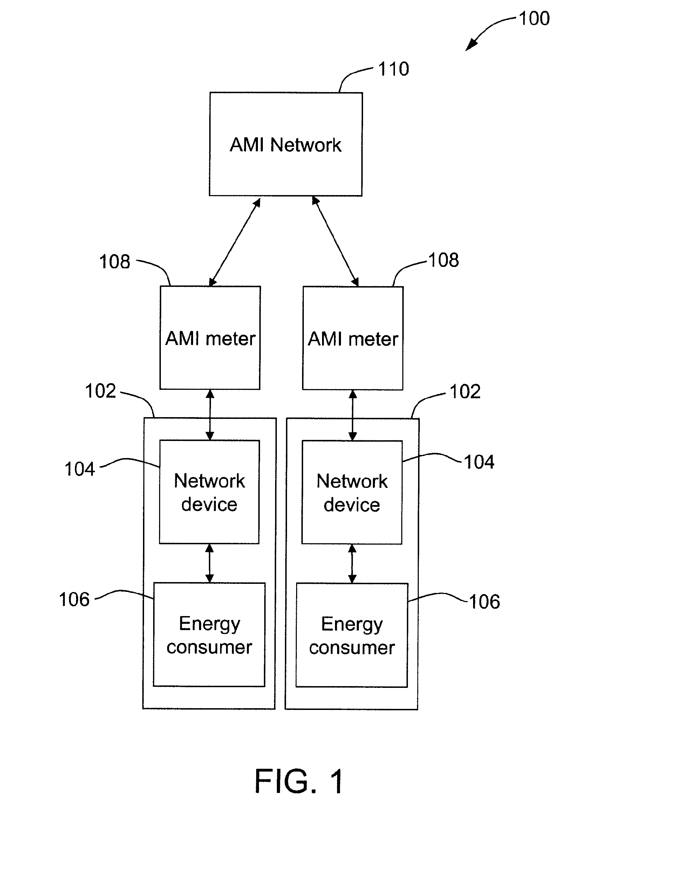

Fig. 1 illustrates an example system 100 that may be used with a utility company (not shown), such as an electric utility company. Moreover, in the example embodiment, the utility company provides energy, such as electricity, to a plurality of locations 102. Alternatively, energy provided by the utility company may include natural gas, propane, and/or any other form of energy and/or product usable for generating energy. Locations 102 may include, but are not limited to only including, a residence, an office building, an industrial facility, and/or any other building or location that receives energy from the utility company. In the example embodiment, system 100 monitors the delivery of energy from the utility company to locations 102.

In the example embodiment, each location 102 includes at least one network device 104 and at least one energy consumer 106 that is coupled to network device 104. As used herein, the term "couple" is not limited to a direct mechanical and/or electrical connection between components, but may also include an indirect mechanical and/or electrical connection between components. In the example embodiment, network device 104 includes a dashboard, a console, and/or any other device that enables system 100 to function as described herein. Network device 104 transmits and receives data, such as power management messages, between energy consumers 106 and one or more systems or components of the utility company. In the example embodiment, energy consumers 106 are devices, such as appliances, machines, lighting systems, security systems, computer systems, and/or any other load that consumes energy received from the utility.

In the example embodiment, at least one advanced metering infrastructure (AMI) meter 108 is coupled to each network device 104 within, or proximate to, each location 102. Moreover, in the example embodiment, AMI meter 108 is coupled to each energy consumer 106, within location 102, via network device 104. In an alternative embodiment, location 102 does not include a network device 104, but rather AMI meter 108 is coupled directly to energy consumers 106 in location 102. In the example embodiment, AMI meter 108 measures an amount of energy consumed by each energy consumer 106 within location 102, and transmits data representative of the energy consumption (hereinafter referred to as "energy consumption measurements") to an AMI network 110, as described in more detail below. Moreover, in the example embodiment, AMI meters 108 are programmed to measure the energy consumption of each energy consumer 106 at a start of a billing period, and at an end of the billing period and to store energy consumption measurements within a memory device (not shown) located within each AMI meter 108. An example billing period may be 30 days, a calendar month, and/or any other defined time period. Moreover, in the example embodiment, AMI meters 108 measure and store power measurements periodically, such as every hour, every 10 minutes, and/or at any other defined frequency. Moreover, AMI meters 108 also measure energy consumption upon a request (i.e., "on demand") initiated by a system coupled in communication with AMI meters 108. In the example embodiment, AMI meters 108 are programmed to automatically transmit the measurements to AMI network 110.

AMI network 110, in the example embodiment, includes at least one computer that is located at the utility company, such as within a data center (not shown) of the utility company. Alternatively, AMI network 110 may be located external to the utility company, and AMI network 110 may be coupled in communication with a computer system or other device (not shown) at the utility company. In the example embodiment, AMI network 110 receives energy consumption measurements from AMI meters 108 and stores the energy consumption measurements on one or more data files (not shown) associated with each AMI meter 108.

As used herein, the term "computer" refers to a system that includes at least one processor and at least one memory device. The processor may include any suitable programmable circuit including one or more systems and microcontrollers, microprocessors, reduced instruction set circuits (RISC), application specific integrated circuits (ASIC), programmable logic circuits, field programmable gate arrays (FPGA), and any other circuit capable of executing the functions described herein. The above are by way of example only, and thus are not intended to limit in any way the definition and/or meaning of the term "processor." Moreover, in the example embodiment, the memory device includes a computer-readable medium, such as, without limitation, random access memory (RAM), flash memory, a hard disk drive, a solid state drive, a diskette, a flash drive, a compact disc, a digital video disc, and/or any suitable memory that enables the processor to store, retrieve, and/or execute instructions and/or data.

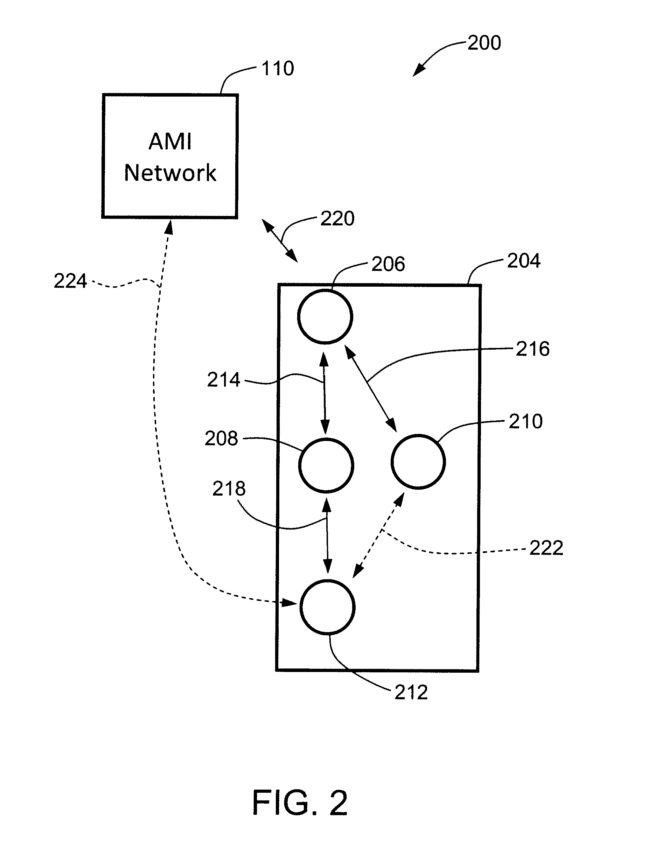

Fig. 2 is a schematic diagram of an example communication system 200 that may be used with system 100 (shown in Fig. 1). In the example embodiment, communication system 200 includes advanced metering infrastructure (AMI) network 110 and a meter network 204. Meter network 204 includes a plurality of meters 206, 208, 210, and 212. Those skilled in the art will appreciate that meter network 204 may include any suitable number of meters that enables network 204 to function as described herein.

In the example embodiment, meters 206, 208, 210, and 212 are coupled to, and/or are a part of, AMI network 110. In the example embodiment, communication system 200 includes a plurality of communication links 214, 216, 218, and 220 that include data and/or power conduits, such as network and/or power cables, that enable data to be transmitted and received between meters 206, 208, 210, and 212 and AMI network 110. Moreover, in the example embodiment, AMI network 110 includes at least one computer, such as a server, and/or at least one router or switch that enables data to be routed to various destinations.

Communication links 214, 216, 218, and 220 established between meters 206, 208, 210, and 212 and AMI network 110 enable communications between meters 206, 208, 210, and 212 and AMI network 110. Each communication link 214, 216, 218, and 220 utilizes a physical communication medium to facilitate communications. A physical communication medium may correspond to the physical layer (PHY) of the Open Systems Interconnection (OSI) Model. Different types of physical communication media include, but are not limited to only including a mesh network, a power line communication (PLC) network, a cellular network, a general packet radio service (GPRS) network, an Enhanced Data Rates for Global Evolution (EDGE) network, a WiMAX network, a WiFi network, a Zigbee ® network, a P1901 network, and a HomePlug network. ZigBee ® is a registered trademark of ZigBee Alliance, Inc., of San Ramon, CA.

In the example embodiment, meter 206 communicates with AMI network 110 via communication link 220. Meters 208, 210, and 212 initially route communications through meter 206 to communicate with AMI network 110. In the example embodiment, communication system 200 also includes potential new communication links 222 and 224, which are described in more detail below.

In the example embodiment, meters 206, 208, 210, and 212 each communicate via communication links 214, 216, 218, and 220 using a plurality of physical communication media, including at least a first physical communication medium and a second physical communication medium. Accordingly, communication links 214, 216, 218, and 220 also utilize a plurality of physical communication media. Such a configuration permits meters 206, 208, 210, and 212 to maintain communications with AMI network 110 when a given physical communication medium fails, as described in more detail below.

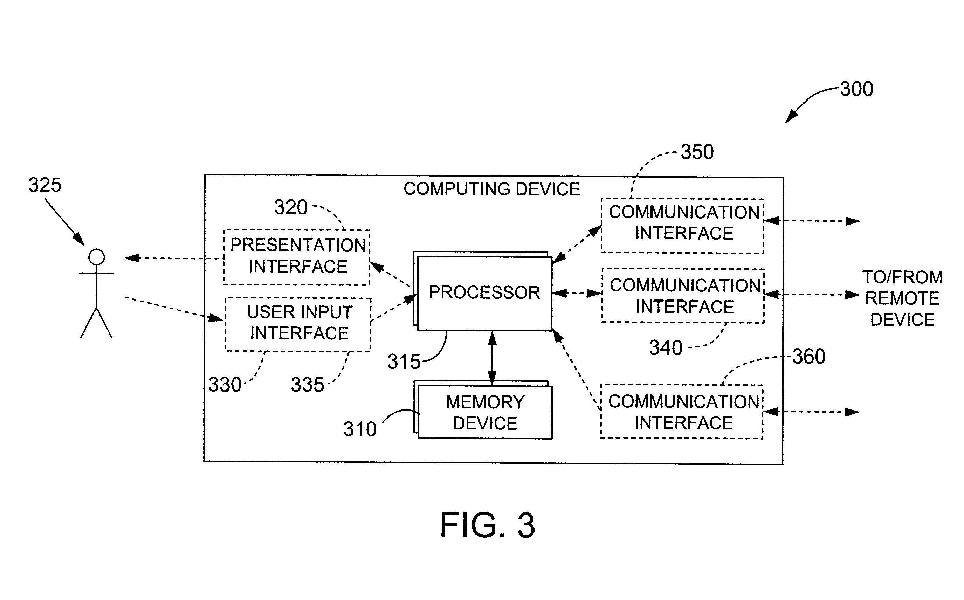

Fig. 3 is a block diagram of an example computing device 300. In the example embodiment, each meter 206, 208, 210, and 212 includes computing device 300. Computing device 300 includes a memory device 310 and a processor 315 that is coupled to memory device 310 for executing instructions. In some embodiments, executable instructions are stored in memory device 310. Computing device 300 performs one or more operations described herein by programming processor 315. For example, processor 315 may be programmed by encoding an operation as one or more executable instructions and by providing the executable instructions in memory device 310. Processor 315 may include one or more processing units (e.g., in a multicore configuration).

In the example embodiment, memory device 310 is one or more devices that enables information such as executable instructions and/or other data to be stored and retrieved. Memory device 310 may include one or more computer readable media, such as, without limitation, dynamic random access memory (DRAM), static random access memory (SRAM), a solid state disk, and/or a hard disk. Memory device 310 may be configured to store, without limitation, application source code, application object code, source code portions of interest, object code portions of interest, configuration data, execution events and/or any other type of data.

In some embodiments, computing device 300 includes a presentation interface 320 that is coupled to processor 315. Presentation interface 320 presents information, such as application source code and/or execution events, to a user 325. For example, presentation interface 320 may include a display adapter (not shown) that may be coupled to a display device, such as a cathode ray tube (CRT), a liquid crystal display (LCD), an organic LED (OLED) display, and/or an "electronic ink" display. In some embodiments, presentation interface 320 includes one or more display devices.

In some embodiments, computing device 300 includes an input interface 330, such as a user input interface 335. In the example embodiment, user input interface 335 is coupled to processor 315 and receives input from user 325. User input interface 335 may include, for example, a keyboard, a pointing device, a mouse, a stylus, a touch sensitive panel (e.g., a touch pad or a touch screen), a gyroscope, an accelerometer, a position detector, and/or an audio user input interface. A single component, such as a touch screen, may function as both a display device of presentation interface 320 and user input interface 335.

In the example embodiment, computing device 300 includes a plurality of communication interfaces 340. Each communication interface 340 communicates using a different physical communication medium, and communication interfaces 340 are coupled to processor 315. Moreover, interfaces 340 are configured to be coupled in communication with one or more remote devices, such as another computing device 300 included as part of AMI network 110 or other meters 206, 208, 210, and/or 212. For example, communication interface 340 may include, without limitation, a wired network adapter, a wireless network adapter, and/or a mobile telecommunications adapter. Communication interface 340 may also transmit data to one or more remote devices, such as another computing device 300 included as part of AMI network 110 or other meters 206, 208, 210, and 212.

For example, referring to Figs. 2 and 3, in one embodiment, meter 212 may include a computing device 300 with a first communication interface 350 that communicates using power line communication (PLC), and a second communication interface 360 that communicates using WiFi. As such, meter 212 is configured to communicate via communication link 218 using both PLC and WiFi, wherein PLC is the first physical communication medium and WiFi is the second physical communication medium for meter 212. More specifically, meter 212 may initially communicate via communication link 218 using PLC, but, if the PLC physical communication medium for communication link 218 fails, due to, for example, a service disruption, meter 212 can no longer communicate using PLC. Examples of a service disruption could be as a result of inclement weather, physical damage to communication link 218, electrical interference, radio interference, vegetation growth, and/or new building developments. However, the service disruption may not have affected communications via communications link 218 using WiFi as the physical communication medium. As such, to reestablish communications, meter processor 315 may switch from communicating using PLC with first communication interface 350 to communicating using WiFi with second communication interface 360. Because meter 212 is able to utilize a plurality of physical communication media that use a plurality of communication interfaces, when one physical communication medium fails, communications may be maintained without requiring manual repair or replacement of meter 212 and/or communication link 218.

Accordingly, in the example embodiment, processor 315 is programmed to select a physical communication medium based on the operational state of physical communication media. The "operational state" of a given physical communication medium indicates whether communications are enabled via the given physical communication medium. For instance, in the above example, due to the service disruption, the PLC physical communication medium was placed in a non-operational state, while the WiFi physical communication medium was activated to an operational state.

In the example embodiment, each meter 206, 208, 210, and 212 is also configured to rank order each of the physical communication media available to it, and to conduct communications accordingly. In the example embodiment, to enable rank ordering, a hierarchy of physical communication media is stored in memory device 310 of computing device 300. Accordingly, processor 315 selects one of communication interfaces 340 for communications based on the hierarchy stored in memory device 310.

For example, meter 212 may be able to communicate via either first communication interface 350 using Zigbee ®, or via second communication interface 360 using PLC. Zigbee ® networks typically utilize less power than PLC networks, and accordingly, the hierarchy stored in memory device 310 may instruct processor 315 to communicate using Zigbee ® rather than PLC, when both physical communication media are available. In one embodiment, the hierarchy stored in memory device 310 rank orders physical communication media based on cost, data capacity, throughput, reliability, predictability of communications quality, predictability of transmission duration, and/or power consumption. Alternatively, the hierarchy stored in memory device 310 may rank order physical communication media based on any criteria that enables meters to function as described herein.

In the example embodiment, each meter 206, 208, 210, and 212 transmits a polling signal to other meters 206, 208, 210, and 212 in the meter network 204 to determine the communication capabilities of the polled meters. In the example embodiment, each meter 206, 208, 210, and 212 also broadcasts a signal including its own communication capabilities. The broadcasting and polling signals may include information pertaining to at least one of the physical communication media supported by a given meter, currently established communication links, the physical communication media operable over each of the established communication links, potential new communication links, and physical communication media operable over the potential communication links. The broadcast and polling signals enable meters 206, 208, 210, and 212 to dynamically discover alternate communication routes using available physical communication media, as described in more detail below.

More specifically, in polling and/or broadcast signals, each meter 206, 208, 210, and 212 may indicate whether it currently has a communication link 214, 216, 218, and 220 to AMI network 110, the physical communication media operable over communication link 214, 216, 218, and 220, and whether communication link 214, 216, 218, and 220 to AMI network 110 is direct or indirect (e.g., through another meter). Each meter 206, 208, 210, and 212 may also indicate the physical communication media supported by meter 206, 208, 210, and 212.

For example, communication link 218 may completely fail, such that meter 212 is unable to use communication link 218, regardless of the physical communication medium. As shown in Fig. 2, as initially configured, without communication link 218, meter 212 is unable to communicate with AMI network 110. However, meter 212 transmits a polling signal to other meters 206, 208, and 210, and/or AMI network 110 to determine their communication capabilities and discover new communication links. Meter 212 may poll meter 210 for its communication capabilities. In response, meter 210 may respond by alerting meter 212 that meter 210 can communicate with AMI network 110 through communication link 216 and communication link 220. Once meter 212 receives this alert from meter 210, new communication link 222 is established between meter 212 and meter 210, through which meter 212 can now communicate with AMI network 110.

In another example, meter 210 may periodically broadcast a signal including its communication capabilities with other meters 206, 208, and 212, and AMI network 110. Meter 212 may receive the broadcast signal and establish new communication link 222 accordingly.

Those of ordinary skill in the art will appreciate that the previous examples can be extended to multiple different configurations not described in detail herein. For example, in one embodiment, meter 212 may transmit a polling signal directly to AMI network 110 and establish new communication link 224 between meter 212 and AMI network 110.

In one embodiment, in addition to selecting a physical communication medium, processor 315 selects a path for communications based on an effective distance between meter, 206, 208, 210, and 212. The "effective distance" is defined as the number of remote devices (e.g., meters 206, 208, 210, and 212) through which communications must pass to reach AMI network 110. In such an embodiment, processor 315 is programmed to compare effective distances and communicate accordingly.

For example, in the example embodiment, and referring to Fig. 2, meter 212 can communicate with AMI network 110 through meter 208 and through meter 206 via communication links 218, 214, and 220. Alternatively, meter 212 can communicate with AMI network by establishing new communication link 224. Meter 208 communicates directly with AMI network 110 over new communication link 224, as opposed to communicating indirectly with AMI network 110 via communication links 218, 214, and 220. As such, the effective distance between meter 208 and AMI network 110 is shorter over new communication link 224 than via communication links 218, 214, and 220. If processor 315 is programmed to prefer communications over the shortest effective distance, processor 315 may instruct meter 208 to establish and communicate over new communication link 224 rather than via communication links 218, 214, and 220.

Those of ordinary skill in the art will appreciate that the previous examples can be extended to multiple different configurations not described in detail herein. For example, processor 315 may compare effective distances between existing communication links, potential new communication links, direct communication links, and/or indirect communication links.

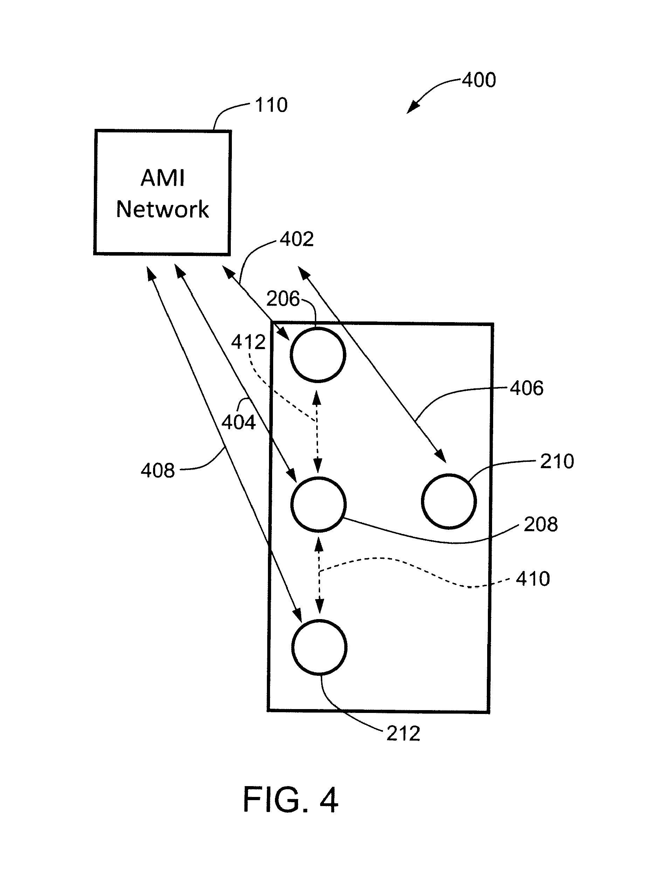

Fig. 4 is a schematic diagram of an example communication system 400 that may be used with system 100 (shown in Fig. 1). Communication system 400 is generally similar to communication system 200 (shown in Fig. 2). However, unlike communication system 200, in communication system 400, meters 206, 208, 210, and 212 are all initially configured to communicate directly with advanced metering infrastructure (AMI) network 110 via communication links 402, 404, 406, and 408, respectively. The methods and systems described above with respect to communication system 200 can be implemented in communication system 400. That is, in the example embodiment, meters 206, 208, 210, and 212 each include computing device 300, and utilize multiple physical communication media to maintain communications via existing communication links 402, 404, 406, and 408, as described above. Further, meters 206, 208, 210, and 212 in communication system 400 transmit polling signals and broadcast signals to discover and establish new communication links. For example, new communication links 410 and 412 may be established, such that meter 212 can communicate with AMI network 110 through meters 208 and 206.

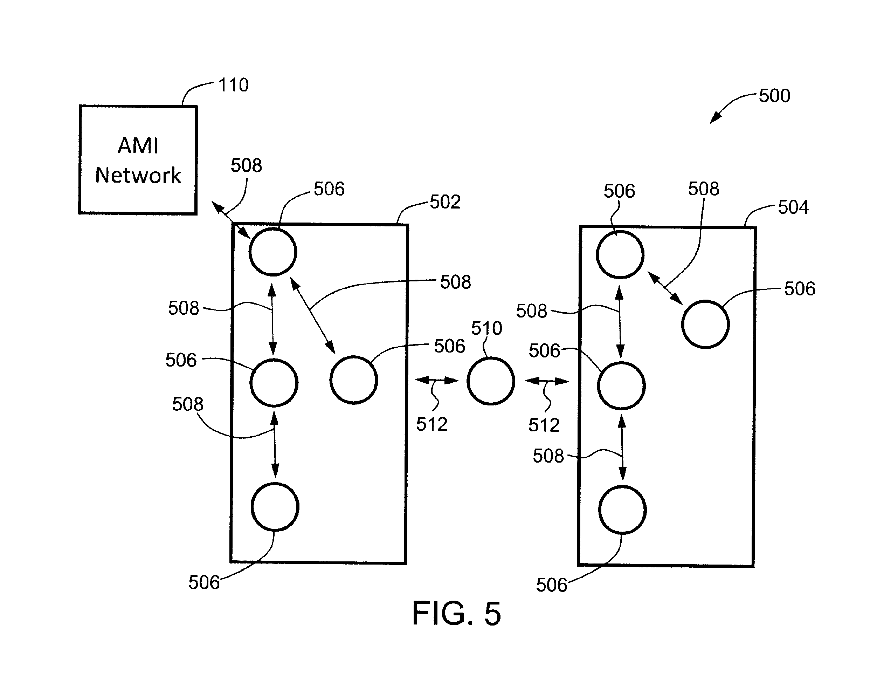

Fig. 5 is a schematic diagram of an example communication system 500 that may be used with system 100 (shown in Fig. 1). Communication system 500 includes advanced metering infrastructure (AMI) network 110, a first meter network 502, and a second meter network 504. First meter network 502 and second meter network 504 each include a plurality of meters 506 and a plurality of communication links 508. In the example embodiment, meters 506 each include computing device 300. First meter network 502 communicates directly with AMI network 110, and second meter network 504 communicates with AMI network 110 by routing communications through first meter network 502.

In the example embodiment, second meter network 504 communicates with first meter network 502 through at least one bridge meter 510 and through bridge communication links 512. In the example embodiment, bridge meter includes computing device 300. In some embodiments, bridge meter 510 is part of another meter network (not shown). In one embodiment, bridge meter 510 and bridge communication links 512 utilize the same physical communication media as communication links 508 in first meter network 502 and second meter network 504. Alternatively, bridge meter 510 and bridge communication links 512 may utilize physical communication media different from those utilized in communication links 508 in first meter network 502 and second meter network 504. Meters 506, communication links 508, bridge meter 510, and bridge communication links 512 are capable of utilizing the methods and systems described with respect to communication system 200 to facilitate communications in communication system 500.

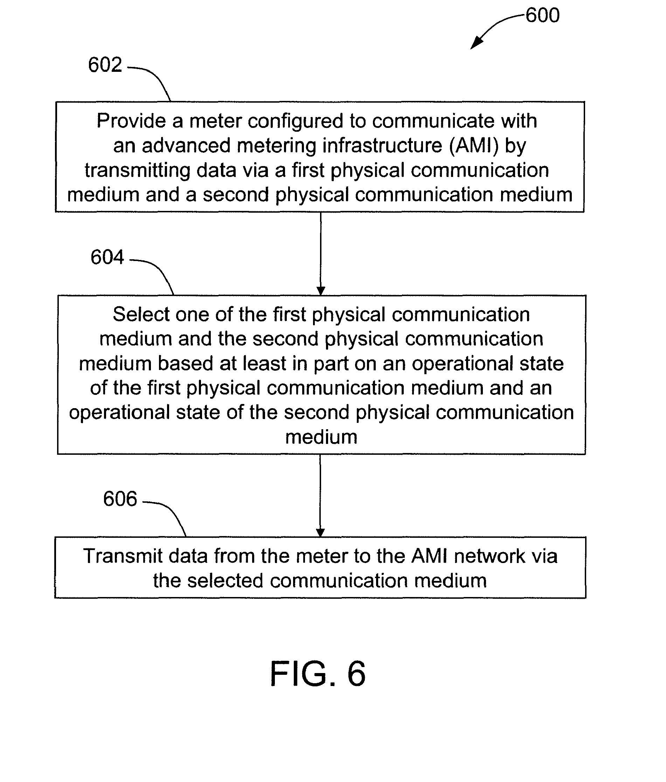

Fig. 6 is a flowchart of an example method 600 that may be used with communication system 200 shown in Fig. 2. In the example embodiment, method 600 includes providing 602 a meter 206, 208, 210, and 212 that can communicate with an advanced metering infrastructure (AMI) network 110 by transmitting data via a first physical communication medium and via a second physical communication medium. In addition, one of the first physical communication medium and the second physical communication medium are selected 604 based at least in part on an operational state of the first physical communication medium and an operational state of the second physical communication medium. Data is transmitted 606 from meter 212 to AMI network 110 via the selected communication medium.

Those skilled in the art will appreciate that beyond those configurations specifically described herein, many different configurations of meters, AMI networks, and communication links can be utilized to perform the systems and methods described herein.

The systems and methods described herein facilitate maintaining communications in an advanced metering infrastructure (AMI). More specifically, because the systems and methods described herein include meters that communicate using a plurality of physical communication media. As such, if one physical communication medium fails, the meters described herein are still capable of communicating with an AMI network. Moreover, the meters described herein are configured to select a physical communication medium to be used based on a ranked hierarchy, improving the efficiency of communications in the AMI. Finally, the systems and methods described herein enable meters to dynamically discover and establish new communication links between one another and the AMI network.

Example embodiments of systems and methods for transmitting data in an advanced metering infrastructure are described above in detail. The systems and methods are not limited to the specific embodiments described herein, but rather, components of the systems and/or steps of the methods may be utilized independently and separately from other components and/or steps described herein. For example, the meters described herein may also be used in combination with other energy systems and methods, and are not limited to practice with only the system as described herein. Rather, the example embodiment can be implemented and utilized in connection with many other utility and/or energy applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A system (200) for transmitting data in an advanced metering infrastructure (AMI), said system comprising:
an AMI network (110) configured to communicate by transmitting data via a plurality of physical communication media that include at least a first physical communication medium and a second physical communication medium; and
a plurality of meters (206, 208, 210, 212) that are each configured to:
select a physical communication medium from the first physical communication medium and the second physical communication medium based at least in part on an operational state of the first physical communication medium and an operational state of the second physical communication medium; and
communicate with said AMI network via the selected physical communication medium.

2. A system (200) in accordance with Claim 1, wherein at least one of the first physical communication medium and the second physical communication medium comprises at least one of a mesh network, a power line communication (PLC) network, a cellular network, a general packet radio service (GPRS) network, an Enhanced Data Rates for Global Evolution (EDGE) network, a WiMAX network, a WiFi network, a Zigbee ® network, a P1901 network, and a HomePlug network.

3. A system (200) in accordance with Claim 1 or Claim 2, wherein each of said plurality of meters (206, 208, 210, 212) is configured to select the physical communication medium based on a predetermined hierarchy of physical communication media.

4. A system (200) in accordance with Claim 3, wherein the predetermined hierarchy is based on at least one of usage, cost, data capacity, reliability, predictability of communications quality, predictability of transmission duration, and power consumption of the physical communication media.

5. A system (200) in accordance with any one of Claims 1 to 4, wherein each of said plurality of meters (206, 208, 210, 212) is configured to broadcast a signal indicating which physical communication media a respective meter is capable of utilizing.

6. A system (200) in accordance with any one of Claims 1 to 5, wherein each of said plurality of meters (206, 208, 210, 212) is configured to poll remaining meters of said plurality of meters to determine which physical communication media said remaining plurality of meters are capable of utilizing.

7. A meter (206) for use in an advanced metering infrastructure (AMI), said meter comprising:
a first communication interface (350) configured to communicate with an AMI network (110) using a first physical communication medium;
a second communication (360) interface configured to communicate with the AMI network using a second physical communication medium; and
a processor (315) coupled to said first communication interface and said second communication interface, wherein said processor is programmed to:
select one of said first communication interface and said second communication interface based at least in part on an operational state of the first physical communication medium and an operational state of the second physical communication medium; and
communicate with the AMI network using the selected communication interface.

8. A meter (206) in accordance with Claim 7 further comprising a memory device (310) for storing a ranked hierarchy of physical communication media.

9. A meter (206) in accordance with Claim 8, wherein said processor (315) is programmed to select one of said first communication interface and said second communication interface further based on the ranked hierarchy of physical communication media.

10. A meter (206) in accordance with Claim 7, 8 or 9, wherein said processor (315) is further programmed to select a path for communications based on an effective distance between the meter and the AMI network (110).

11. A meter in accordance with any one of Claims 7 to 10, wherein at least one of said first communication interface and said second communication interface are configured to communicate using at least one of a mesh network, a power line communication (PLC) network, a cellular network, a general packet radio service (GPRS) network, an Enhanced Data Rates for Global Evolution (EDGE) network, a WiMAX network, a WiFi network, a Zigbee ® network, a P1901 network, and a HomePlug network.

12. A method for transmitting data in an advanced metering infrastructure (AMI), said method comprising;
providing a meter (206) configured to communicate with an AMI network (110) by transmitting data via a first physical communication medium and via a second physical communication medium;
selecting one of the first physical communication medium and the second physical communication medium based at least in part on an operational state of the first physical communication medium and an operational state of the second physical communication medium; and
transmitting data from the meter (206) to the AMI network (110) via the selected communication medium.

13. A method in accordance with Claim 12, wherein selecting one of the first physical communication medium and the second physical communication medium comprises selecting the second physical communication medium when the first physical communication medium fails.

14. A method in accordance with Claim 12 or Claim 13, wherein selecting one of the first physical communication medium and the second physical communication medium further comprises selecting the first physical communication medium based at least in part on a preference for the first physical communication medium over the second physical communication medium.

15. A method in accordance with Claim 14, wherein the preference is based on at least one of cost, data capacity, reliability, predictability of communications quality, predictability of transmission duration, and power consumption of the first physical communication medium and the second physical communication medium, and wherein the preference preferably is based on a ranked hierarchy of physical communication media.
